# EUROPÄISCHE PATENTSCHRIFT

(11) **EP 3 959 037 B1**
(45) Veröffentlichungstag und Bekanntmachung des Hinweises auf die Patenterteilung: **12.02.2025**
(21) Anmeldenummer: 20715787.6
(22) Anmeldetag: 24.03.2020
(51) Int. Cl.: B08B 7/00, C01B 32/55, B24C 5/04, B05B 7/06, B05B 7/08, B05B 7/14, B24C 1/00

(54) **VORRICHTUNG ZUM ERZEUGEN EINES CO2-SCHNEE-STRAHLS**
DEVICE FOR GENERATING A CO2 SNOW JET
DISPOSITIF DE PRODUCTION D'UN JET DE NEIGE À CO2

(30) Priorität: 29.03.2019 DE 102019108289
(43) Veröffentlichungstag der Anmeldung: 02.03.2022
(73) Patentinhaber: ACP Systems AG, 78658 Zimmern ob Rottweil (DE)
(72) Erfinder: JÄGER, Felix, 78333 Stockach (DE); ILLG, Jonas, 71254 Ditzingen (DE)
(74) Vertreter: DREISS Patentanwälte PartG mbB
(86) Internationale Anmeldenummer: PCT/EP2020/058112
(87) Internationale Veröffentlichungsnummer: WO 2020/200909

(56) Entgegenhaltungen:
- WO-A1-2004/033154
- US-A1- 2006 124 156

## Beschreibung

Die Erfindung betrifft eine Vorrichtung zum Erzeugen eines CO₂-Schnee-Strahls, mit einem sich in einer Strömungsrichtung erstreckenden Expansionskanal zum Erzeugen eines CO₂-Gas/CO₂-Schnee Gemisches ausgehend von flüssigem CO₂, wobei der Expansionskanal eine Eintrittsöffnung zum Zuführen von flüssigem CO₂ und eine Austrittsöffnung zum Ausgeben des CO₂-Gas/CO₂-Schnee Gemisches aufweist, und mit einer Düse zum Erzeugen eines Mantelstrahls, welcher das aus der Austrittsöffnung des Expansionskanals ausgegebene CO₂-Gas/CO₂-Schnee Gemisch umgibt und dieses beschleunigt, wobei der Expansionskanal mehrere in Strömungsrichtung hintereinander angeordnete Kanalabschnitte aufweist, wobei sich der in einer Ebene orthogonal zu der Strömungsrichtung liegende Querschnitt des Expansionskanals in einem jeweiligen Übergang oder Übergangsbereich zwischen den Kanalabschnitten lokal ändert und dass der Querschnitt des Expansionskanals an dem stromaufwärts gelegenen Ende eines jeweiligen Kanalabschnitts größer ist als der Querschnitt des Expansionskanals an dem stromaufwärts gelegenen Ende des in Strömungsrichtung vor dem jeweiligen Kanalabschnitt angeordneten Kanalabschnitts. Solche Vorrichtungen haben sich in der Praxis zur schonenden Reinigung von Oberflächen, bspw. von Werkstückoberflächen, vor Lackier- oder Beschichtungsprozessen oder von Funktionsoberflächen in der Halbleiterindustrie und in der Medizintechnik bewährt. Insbesondere ermöglicht eine Oberflächenreinigung mittels eines CO₂-Schnee-Strahls (sog. "CO₂-Schneestrahlen") eine trockene (wasserfreie), lösemittelfreie und rückstandsfreie Entfernung filmischer und/oder partikulärer Verunreinigungen (bspw. Staub, Ablationsrückstände, Reste von Schneidemulsionen, Fingerabdrücke, etc.).

Zum Erzeugen eines CO₂-Schnee-Strahls wird flüssiges CO₂ (Kohlendioxid) bei einem Ausgangsdruck von üblicherweise in etwa 60 bar oder, bei Versorgung aus Niederdrucktanks, in etwa 20 bar über die Eintrittsöffnung dem Expansionskanal zugeführt. Über eine Länge des Expansionskanals fällt der Druck vom Ausgangsdruck an der Eintrittsöffnung bis auf Umgebungsdruck (üblicherweise 1 bar) an der Austrittsöffnung ab. Mit fallendem Druck findet eine schrittweise Phasenumwandlung von flüssigem CO₂ in gasförmiges CO₂ bei gleichzeitiger Abkühlung des Gemisches statt. Bei Unterschreitung des Drucks am Tripelpunkt von CO₂ (5,185 bar) wandelt sich die verbleibende flüssige Phase zumindest teilweise in festes CO₂ in Form von Schneekristallen, sog. CO₂-Schnee, um. Bei CO₂-"Schnee" handelt es sich also um CO₂ in einem festen Aggregatzustand und insbesondere nicht um "Schnee" im Sinne von gefrorenem Wasser. Die entstehenden CO₂-Schneekristalle werden durch das in Folge der Entspannung beschleunigte CO₂-Gas mitgerissen, beschleunigt und gemeinsam mit dem CO₂-Gas als CO₂-Gas/CO₂-Schnee Gemisch aus der Austrittsöffnung ausgegeben. Das CO₂-Gas/CO₂-Schnee Gemisch wird dann von dem durch die Düse gebildeten Mantelstrahl gebündelt und weiter zu einem CO₂-Schnee-Strahl beschleunigt.

Die Reinigungswirkung eines CO₂-Schnee-Strahls beim Auftreffen auf eine Oberfläche beruht im Wesentlichen auf vier Wirkmechanismen: 1. Verspröden von Verunreinigungen durch schnelles Abkühlen (Sublimationspunkt von CO₂-Schnee bei Atmosphärendruck: -78,5 °C); 2. Abrasion durch Impulsübertrag (beschleunigte CO₂-Schneekristalle übertragen Druck- und Scherkräfte beim Auftreffen auf die Oberfläche); 3. Chemische Lösung von Verunreinigungen, bspw. von Adsorptionsverbindungen (im Zuge des Aufpralls von CO₂-Schneekristallen auf eine Oberfläche kann CO₂ in einen überkritischen Zustand überführt werden; in diesem Zustand ist CO₂ ein gutes chemisches Lösemittel); 4. Wegschleudern von Verunreinigungen durch (ca. 500-fache) Volumenzunahme bei der Sublimation von CO₂ aus der festen Phase in die Gasphase.

Aus WO 02/075799 A1 und auch aus US 7,762,869 B2 sind nicht gattungsgemäße Vorrichtungen zum Erzeugen eines CO2-Schnee-Strahls bekannt, bei denen die Phasenumwandlung von flüssigem CO₂ in CO2-Schnee erst in einer Mischkammer erfolgt, in welche flüssiges CO2 in ein ebenfalls zugeführtes Trägergas expandiert wird. Dieses CO2-Schnee/Trägergasgemisch wird durch aufeinanderfolgende Venturidüsen weiter gefördert und physikalisch behandelt, wodurch der Schneeanteil in dem Gemisch ansteigt. Auch DE 10 2016 123 816 A1 zeigt eine derartige Vorrichtung. WO 2004/033154 A1 zeigt ebenfalls eine nicht gattungsgemäße Vorrichtung zum Erzeugen eines CO2-Schnee-Strahls, bei der flüssiges CO2 in einem großvolumigen Entspannungsraum expandiert wird und dann mit einem Trägergasstrom zusammengeführt wird, der dann zu einer Lavaldüse geführt wird. Der Entspannungsraum kann als Expansionskanal mit zwei Kanalabschnitten und einem Übergangsbereich dazwischen betrachtet werden, wobei der Querschnitt in dem Übergangsbereich zum abstromseitigen Kanalabschnitt zunimmt.

CO₂-Schneestrahlen ist von dem regelmäßig stärker abrasiv wirkenden CO₂-Trockeneisstrahlen zu unterscheiden, bei dem Trockeneispellets (Pellets aus festem CO₂, also insbesondere keine CO2-Schneekristalle) in einer Strahlanlage beschleunigt und auf ein zu reinigendes Werkstück gestrahlt werden. Während Trockeneispellets üblicherweise in einem separat von der Strahlanlage bereitgestellten Pelletierer hergestellt werden und dann batchweise der Strahlanlage zugeführt werden, ermöglicht CO₂-Schneestrahlen einen kontinuierlichen Betrieb und eignet sich daher insbesondere zur Automatisierung. US 2010/0170965 A1 und WO 2015/109101 A1 betrifft und offenbart Pelletstrahlvorrichtungen, bei denen in einem Strahl geführte Trockeneispellets durch eine gitterartige Blende weiter zerkleinert werden.

US 2006/0124156 A1 offenbart eine Vorrichtung mit den Merkmalen des Oberbegriffs der Ansprüche 1 und 5.

Aufgabe der vorliegenden Erfindung ist es, eine gattungsgemäße Vorrichtung derart weiter zu verbessern, dass eine höhere Reinigungswirkung beim CO₂-Schneestrahlen erzielt wird. Die Vorrichtung soll dabei auf wirtschaftliche Weise betrieben werden können.

Diese Aufgabe wird durch eine Vorrichtung mit den Merkmalen der unabhängigen Ansprüche 1 und 5 gelöst.

Eine solche Ausgestaltung ermöglicht es, den Impuls des CO₂-Schnee-Strahls, insbesondere der CO₂-Schneepartikel, zu erhöhen und auf diese Weise die Abrasivität beim Auftreffen des CO₂-Schnee-Strahls auf eine zu reinigende Oberfläche zu steigern. Hierdurch können auch stark haftende Verunreinigungen auf der Oberfläche zuverlässig entfernt werden. Insbesondere ermöglicht es eine erfindungsgemäße Ausgestaltung der Vorrichtung, den Impuls der CO₂-Schneepartikel bereits im Expansionskanal zu erhöhen, was eine wirtschaftliche Betriebsweise der Vorrichtung begünstigt.

Erfindungsgemäß wurde erkannt, dass im Zuge der im Expansionskanal stattfindenden Phasenumwandlung von flüssigem CO₂ in gasförmiges CO₂ eine Zweiphasenströmung entsteht, wobei die Flüssigphase ringförmig am Rand des Expansionskanals strömt (Fluidströmung) und die Gasphase in einem mittigen Bereich des Expansionskanals strömt (Gasströmung). Es hat sich ferner herausgestellt, dass die Gasströmung eine in etwa 10-fach bis 100-fach höhere Strömungsgeschwindigkeit als die Fluidströmung aufweist. Die Gasphase kann nicht zur CO2-Schneeerzeugung verwendet werden, sie ist verloren.

Es versteht sich, dass zum Betrieb einer erfindungsgemäßen Vorrichtung flüssiges CO₂ bei verschiedenen Ausgangsdrücken dem Expansionskanal zugeführt werden kann, insbesondere bei einem Ausgangsdruck in einem Bereich von etwa 5 bis 70 bar.

Dadurch, dass sich der Querschnitt des Expansionskanals bei einer erfindungsgemäßen Vorrichtung in einem jeweiligen Übergang oder Übergangsbereich zwischen den Kanalabschnitten wie beansprucht ändert, entsteht an diesen Übergängen bzw. Übergangsbereichen jeweils ein Drucksprung, welcher eine Verwirbelung der Fluid- und Gasströmung und somit eine Durchmischung von Gas- und Flüssigphase mit sich bringt. Im Zuge der Durchmischung von Gas- und Flüssigphase wird die Flüssigphase von der schneller strömenden Gasphase beschleunigt. Schneepartikel, welche bei weiterer Entspannung aus der beschleunigten Flüssigphase entstehen, treten somit mit erhöhter Geschwindigkeit aus der Austrittsöffnung des Expansionskanals aus. Die mit der Geschwindigkeitserhöhung einhergehende Impulserhöhung der Schneepartikel führt zu einer höheren Abrasivität beim Auftreffen der Schneepartikel auf eine Oberfläche und folglich zu einer verbesserten Reinigungswirkung.

Dadurch, dass die Schneepartikel bereits eine vergleichsweise hohe Geschwindigkeit beim Austritt aus dem Expansionskanal aufweisen, ist ferner im Vergleich zu den aus dem Stand der Technik bekannten Vorrichtungen eine geringere Beschleunigung der Schneepartikel durch den Mantelstrahl erforderlich, um eine vorgegebene Soll-Geschwindigkeit zu erreichen. Hierdurch kann der zur Erzeugung des Mantelstrahls erforderliche Gasdurchfluss durch die Düse reduziert werden, wodurch die Betriebskosten der Vorrichtung reduziert werden können.

Die durch die Querschnittsänderung in dem jeweiligen Übergang bzw. Übergangsbereich bewirkte Durchmischung der Flüssigphase und der Gasphase begünstigt ferner die Umwandlung von flüssigem CO₂ in CO₂-Schnee. Auf diese Weise kann der Anteil an CO₂-Schnee in dem CO₂-Schnee-Strahl erhöht werden, was die Abrasivität beim Auftreffen des CO₂-Schnee-Strahls auf eine zu reinigende Oberfläche weiter erhöht.

Darüber hinaus können der Drucksprung und die damit einhergehende Verwirbelung der Strömungen an dem jeweiligen Übergang bzw. Übergangsbereich die Bildung von größeren Flüssigkeitstropfen und in Folge die Bildung von größeren Schneekristallen begünstigen, wodurch ein Impulsübertrag beim Auftreffen auf eine zu bearbeitende Oberfläche erhöht wird. Hierdurch kann die Reinigungswirkung beim CO₂-Schneestrahlen weiter verbessert werden.

Im Rahmen einer bevorzugten Ausgestaltung kann eine Querschnittsänderung in dem jeweiligen Übergang sprunghaft erfolgen, der Übergang also insbesondere keine Erstreckung in Strömungsrichtung aufweisen. Die Durchmischung der Gasphase und der Flüssigphase ist dann besonders effektiv, da durch die sprunghaften Querschnittsänderungen besonders starke Drucksprünge und Verwirbelungen in der Zweiphasenströmung bewirkt werden.

Anspruchsgemäß ist der Querschnitt des Expansionskanals an dem stromaufwärts gelegenen Ende, also an dem in Strömungsrichtung hinteren Ende, eines jeweiligen Kanalabschnitts größer als der Querschnitt des Expansionskanals an dem stromaufwärts gelegenen Ende des in Strömungsrichtung vor dem jeweiligen Kanalabschnitt angeordneten Kanalabschnitts. Der Querschnitt des Expansionskanals an dem stromaufwärts gelegenen Ende eines jeweiligen Kanalabschnitts wird also in Strömungsrichtung gesehen von Kanalabschnitt zu Kanalabschnitt größer. Insofern weitet sich der Expansionskanal über seine gesamte Erstreckung in Strömungsrichtung gesehen auf. Vorzugsweise ist der Querschnitt des Expansionskanals an seiner Austrittsöffnung größer als der Querschnitt des Expansionskanals an seiner Eintrittsöffnung. Auf diese Weise kann das Risiko eines Verstopfens des Expansionskanals durch entstehende CO₂-Schneekristalle, insbesondere durch größere CO₂-Schnee-Agglomerate, verringert werden. Hierdurch wird eine zuverlässige Funktion der Vorrichtung begünstigt.

Im Rahmen einer bevorzugten Ausgestaltung kann der jeweilige Übergang eine Erstreckung in Strömungsrichtung aufweisen. Der jeweilige Übergang ist dann als Übergangsbereich ausgebildet, welcher die jeweiligen Kanalabschnitte miteinander verbindet. In diesem Fall kann sich der Querschnitt des Expansionskanals entlang der Erstreckung des jeweiligen Übergangsbereichs in Strömungsrichtung, insbesondere stetig, ändern. Beispielsweise kann vorgesehen sein, dass sich der Expansionskanal in dem jeweiligen Übergangsbereich konisch verjüngt oder aufweitet.

Zum Erzeugen eines stabilen Mantelstrahls und einer effektiven Beschleunigung des CO₂-Gas/CO₂-Schnee Gemisches erweist es sich weiter als vorteilhaft, wenn die Düse zur Erzeugung des Mantelstrahls als Ringdüse ausgebildet ist, insbesondere welche den Expansionskanal konzentrisch umschließt. Als besonders vorteilhaft erweist es sich, wenn die Düse als Überschalldüse (Laval-Düse) ausgebildet ist. Auf diese Weise kann die Geschwindigkeit der Schneepartikel und somit ein auf eine Oberfläche übertragbarer Impuls weiter erhöht werden. Als Trägergas für den Mantelstrahl erweisen sich insbesondere trockene Gase, beispielsweise Luft oder Stickstoff, insbesondere Reinstluft oder Reinststickstoff, als vorteilhaft.

Erfindungsgemäß ist vorgesehen, dass sich der Querschnitt des Expansionskanals zumindest bei einigen Übergängen oder Übergangsbereichen, vorzugsweise bei jedem Übergang oder Übergangsbereich, in Strömungsrichtung verringert. Es erweist sich als vorteilhaft, wenn sich der Querschnitt in einem jeweiligen Übergang bzw. Übergangsbereich um 25 % bis 75 %, weiter vorzugsweise um 40 % bis 60 %, verringert. Insofern kann eine minimale in einer Ebene orthogonal zu der Strömungsrichtung liegende Querschnittsfläche eines jeweiligen Übergangs bzw. Übergangsbereichs zwischen 75 % und 25 %, vorzugsweise zwischen 60 % und 40 %, der Querschnittsfläche an dem stromabwärts gelegenen Ende, also an dem in Strömungsrichtung vorderen Ende, des in Strömungsrichtung vor dem jeweiligen Übergang bzw. Übergangsbereich angeordneten Kanalabschnitts betragen. Eine betragsmäßig größere Querschnittsänderung führt zu einem größeren Drucksprung, was für eine effektive Durchmischung der Gas- und der Flüssigphase vorteilhaft ist. Eine geringere Querschnittsänderung ist hingegen für einen höheren Durchfluss des CO₂-Gas/CO₂-Schnee Gemisches vorteilhaft.

Es erweist sich als besonders vorteilhaft, wenn sich der Expansionskanal in dem jeweiligen Übergang oder Übergangsbereich nach radial innen verjüngt (Anspruch 2). Dies ermöglicht es, die insbesondere ringförmig am Rand des Expansionskanals strömende Flüssigphase auf besonders effektive Weise in Richtung der Gasströmung zu leiten, was die Durchmischung von Gas- und Flüssigphase begünstigt.

Ferner erweist es sich als besonders vorteilhaft, wenn der jeweilige Übergang oder Übergangsbereich eine kreisringförmige Blende bildet, der Expansionskanal sich also gleichmäßig über einen Umfang des Expansionskanals nach radial innen verjüngt (Anspruch 3). Die Durchmischung der ringförmig strömenden Flüssigphase mit der Gasphase ist dann besonders effektiv. Eine Blendenfläche einer jeweiligen Blende kann dabei als Kollisionsfläche für bereits gebildete Schneepartikel dienen. Beim Auftreffen auf eine Blendenfläche können die Schneepartikel verdichtet werden und zu größeren Schnee-Agglomeraten zusammenwachsen, wodurch die Abrasivität beim Auftreffen der verdichteten Schneepartikel bzw. der Schnee-Agglomerate auf eine Oberfläche erhöht wird.

Bei einer bevorzugten Ausführungsform kann die Blendenfläche orthogonal zu der Strömungsrichtung orientiert sein. Dann verjüngt sich der Expansionskanal sprunghaft. Bei anderen bevorzugten Ausführungsformen kann die Blendenfläche zu der Strömungsrichtung geneigt orientiert sein. Dann kann der jeweilige Übergang als Übergangsbereich mit einer Erstreckung in Strömungsrichtung ausgebildet sein. Vorzugsweise kann sich der Expansionskanal in dem jeweiligen Übergangsbereich konisch verjüngen.

Im Rahmen einer alternativen Ausgestaltung gemäß dem nebengeordneten Anspruch 5 kann sich der Querschnitt des Expansionskanals zumindest bei einigen Übergängen oder Übergangsbereichen, vorzugsweise bei jedem Übergang oder Übergangsbereich, in Strömungsrichtung vergrößern, wobei ein jeweiliger Übergangsbereich als an sich beliebig gestaltete Ausbuchung, insbesondere oval oder blasen- oder kugelabschnittsförmig, ausgebildet ist. Auf diese Weise wird eine besonders starke Verwirbelung in der Strömung und somit eine gute Durchmischung von Flüssig- und Gasphase bewirkt. Durch die Querschnittsvergrößerung kommt es zu Verwirbelungen in der Zweiphasenströmung, welche eine besonders effektive Durchmischung der Flüssigphase und der Gasphase bewirken. Ferner kann sich durch ein lokales Aufweiten des Expansionskanals das flüssige CO₂ weiter entspannen, was eine Umwandlung des flüssigen CO₂s in CO₂-Schnee begünstigt.

Es erweist sich weiter als vorteilhaft, wenn sich der jeweilige Übergang oder Übergangsbereich in Strömungsrichtung über eine Länge von 0 bis 5,0 mm, weiter vorzugsweise über eine Länge von 0 bis 4,0 mm, weiter vorzugsweise über eine Länge von 0 bis 3,0 mm, weiter vorzugsweise über eine Länge von 0 bis 2,0 mm, insbesondere über eine Länge von 1,0 bis 2,0 mm erstreckt (Anspruch 6).

Insbesondere ermöglicht es eine solche Ausgestaltung, den Expansionskanal verhältnismäßig lang auszubilden, sodass ein verhältnismäßig großer Anteil des flüssigen CO₂s in CO₂-Schnee umgewandelt werden kann und die entstehenden CO₂-Schneekristalle zu größeren Kristallen anwachsen können - ohne dass ein Durchfluss durch den Expansionskanal blockiert wird. Auf diese Weise kann der Anteil an CO₂-Schnee in dem CO₂-Schnee-Strahl, insbesondere der Anteil an größeren Schnee-Agglomeraten erhöht werden, was den Impuls des CO₂-Schnee-Strahls erhöht und damit die Reinigungswirkung verbessert.

Im Hinblick auf eine einfache Fertigung erweist es sich ungeachtet einer etwaigen Aufweitung des Expansionskanals entlang seiner Erstreckung in Strömungsrichtung als vorteilhaft, wenn zumindest einige Kanalabschnitte, insbesondere alle Kanalabschnitte, über ihre jeweilige Erstreckung in Strömungsrichtung einen konstanten Querschnitt aufweisen (Anspruch 7).

Nach einer anderen Ausführungsform kann es sich als vorteilhaft erweisen, wenn sich zumindest einige Kanalabschnitte, insbesondere alle Kanalabschnitte, gegebenenfalls mit Ausnahme eines etwa vorgesehenen Zuführabschnitts, über ihre jeweilige Erstreckung in Strömungsrichtung aufweiten, also der Querschnitt an dem stromabwärts gelegenen Ende eines jeweiligen Kanalabschnitts größer ist als der Querschnitt am stromaufwärts gelegenen Ende dieses Kanalabschnitts (Anspruch 8). Es wird vermutet, dass eine derartige Aufweitung der Kanalabschnitte eine weitere Beschleunigung der Strömung nach dem Prinzip der Laval-Düse bewirkt, wodurch die Geschwindigkeit und damit der Impuls der Schneekristalle weiter erhöht werden kann. Ferner wird durch die Aufweitung der Kanalabschnitte das Risiko eines Verstopfens des Expansionskanals durch entstehenden CO₂-Schnee weiter verringert. Besonders bevorzugt ist es, wenn sich die jeweiligen Kanalabschnitte stetig, insbesondere konisch, aufweiten.

Für eine effiziente Umwandlung von flüssigem CO₂ in CO₂-Schnee erweist es sich weiter als vorteilhaft, wenn der Expansionskanal in einer Ebene orthogonal zu der Strömungsrichtung eine maximale Querschnittsfläche von weniger als 5,0 mm², vorzugsweise weniger als 3,0 mm², weiter vorzugsweise weniger als 1,0 mm², weiter vorzugsweise weniger als 0,5 mm² aufweist (Anspruch 9).

Ferner erweist es sich als vorteilhaft, wenn der Expansionskanal durch mindestens einen Hohlraum eines Werkstücks, insbesondere eines zylindrischen Rohrkörpers, gebildet ist (Anspruch 10). Es ist möglich, dass das den Expansionskanal umgrenzende Werkstück monolithisch ausgebildet ist. Beispielsweise ist es möglich, dass ein Werkstück mit Hohlraum mittels eines additiven Fertigungsverfahrens (z.B. 3D-Druck) hergestellt ist. Es ist auch möglich, dass das Werkstück aus zwei oder mehreren Werkstückhälften zusammengesetzt ist, welche im zusammengesetzten Zustand einen Hohlraum umgrenzen. Beispielsweise ist es möglich, dass die Werkstückhälften mittels eines Vakuum-Gießverfahrens hergestellt sind und im Anschluss miteinander gefügt werden. Ferner erweist es sich als vorteilhaft, wenn das Werkstück aus einem Kunststoff gefertigt ist.

Weitere Merkmale, Einzelheiten und Vorteile der Erfindung ergeben sich aus den beigefügten Patentansprüchen und der zeichnerischen Darstellung und nachfolgenden Beschreibung von bevorzugten Ausführungsformen der erfindungsgemäßen Vorrichtung.

In der Zeichnung zeigt:
- Figur 1: eine schematische Darstellung einer Ausführungsform einer Vorrichtung zum Erzeugen eines CO₂-Schnee-Strahls in einer teilweise geschnittenen Ansicht;
- Figur 2a: eine Seitenansicht einer Rohrkörperhälfte eines einen Expansionskanal umgrenzenden Rohrkörpers der Vorrichtung gemäß Fig. 1 in einer ersten Ausgestaltung;
- Figur 2b: ein in Figur 2a mit IIb bezeichneter Ausschnitt in vergrößerter Darstellung;
- Figur 2c: eine Schnittansicht des Ausschnitts gemäß Figur 2b entlang der in Figur 2b eingezeichneten Schnittlinie IIc - IIc;
- Figur 2d: eine perspektivische Ansicht der Rohrkörperhälfte des Rohrkörpers gemäß Figur 2a;
- Figur 3a: eine Seitenansicht einer Rohrkörperhälfte eines einen Expansionskanal umgrenzenden Rohrkörpers der Vorrichtung gemäß Fig. 1 in einer weiteren Ausgestaltung;
- Figur 3b: ein in Figur 3a mit IIIb bezeichneter Ausschnitt in vergrößerter Darstellung;
- Figur 3c: eine perspektivische Ansicht der Rohrkörperhälfte des Rohrkörpers gemäß Figur 3a;
- Figur 4a: eine Seitenansicht einer Rohrkörperhälfte eines einen Expansionskanal umgrenzenden Rohrkörpers der Vorrichtung gemäß Fig. 1 in einer weiteren Ausgestaltung;
- Figur 4b: ein in Figur 4a mit IVb bezeichneter Ausschnitt in vergrößerter Darstellung;
- Figur 4c: eine perspektivische Ansicht der Rohrkörperhälfte des Rohrkörpers gemäß Figur 4a.

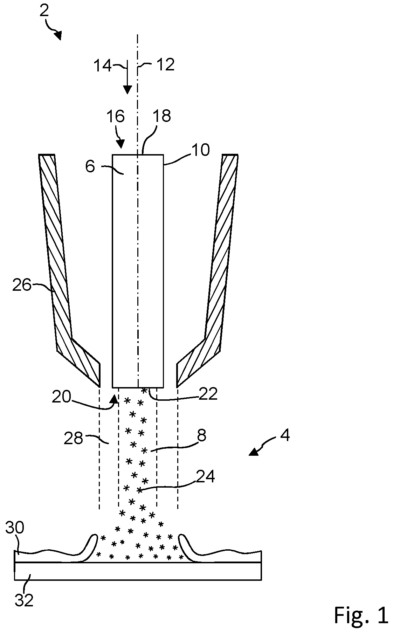

Figur 1 zeigt eine schematische Darstellung einer Ausführungsform einer insgesamt mit dem Bezugszeichen 2 bezeichneten teilweise dargestellten Vorrichtung zum Erzeugen eines CO₂-Schnee-Strahls 4.

Die Vorrichtung 2 weist einen Expansionskanal 6 auf, welcher zum Erzeugen eines CO₂-Gas/CO₂-Schnee Gemisches 8 ausgehend von flüssigem CO₂ dient. Der Expansionskanal 6 ist im beispielhaft dargestellten Fall durch einen Hohlraum eines zylindrischen Rohrkörpers 10 gebildet. Der Rohrkörper 10 und der Expansionskanal 6 erstrecken sich entlang einer zentralen Achse 12 in einer Strömungsrichtung 14.

Der Expansionskanal 6 weist an seinem stromaufwärts gelegenen Ende 16, also an seinem in Strömungsrichtung 14 hinteren Ende, eine Eintrittsöffnung 18 zum Zuführen von flüssigem CO₂ auf. Der Expansionskanal 6 weist ferner an seinem stromabwärts gelegenen Ende 20, also an seinem in Strömungsrichtung 14 vorderen Ende, eine Austrittsöffnung 22 zum Ausgeben des in dem Expansionskanal 6 gebildeten CO₂-Gas/CO₂-Schnee Gemischs 8 auf.

Zum Erzeugen des CO₂-Gas/CO₂-Schnee Gemisches 8 wird flüssiges CO₂, beispielhaft und bevorzugt bei einem Ausgangsdruck von ca. 60 bar oder, bei Versorgung aus Niederdrucktanks, von ca. 20 bar durch nicht dargestellte Vorrichtungskomponenten über die Eintrittsöffnung 18 dem Expansionskanal 6 in Strömungsrichtung 14 zugeführt. Über die Erstreckung des Expansionskanals 6 in Strömungsrichtung 14 fällt der Druck vom Ausgangsdruck an der Eintrittsöffnung 18 bis auf Umgebungsdruck (ca. 1 bar) an der Austrittsöffnung 22 ab. Mit fallendem Druck findet eine schrittweise Phasenumwandlung von flüssigem CO₂ in gasförmiges CO₂ bei gleichzeitiger Abkühlung des Gemisches statt. Im Zuge der Phasenumwandlung bildet sich eine Zweiphasenströmung aus, wobei die Flüssigphase ringförmig am Rand des Expansionskanals 6 strömt und die Gasphase in einem mittigen Bereich des Expansionskanals 6 strömt. Bei Unterschreitung des Drucks am Tripelpunkt von CO₂ (5,185 bar) wandelt sich die verbleibende Flüssigphase schrittweise in festes CO₂ in Form von CO₂-Schneekristallen 22, sog. CO₂-Schnee, um. Es sind dann drei Phasen vorhanden. Die entstehenden CO₂-Schneekristalle 24 werden durch die Gasströmung mitgerissen, beschleunigt und gemeinsam mit dem CO₂-Gas als CO₂-Gas/CO₂-Schnee Gemisch 8 aus der Austrittsöffnung 22 ausgegeben. Wie eingangs erläutert, werden durch die Querschnittsveränderungen und die dadurch hervorgerufenen Drucksprünge größere Schneekristalle, insbesondere ein größerer Schneeanteil, gebildet.

Die Vorrichtung 2 weist ferner eine Düse 26 zum Erzeugen eines Mantelstrahls 28 aus einem Trägergas, beispielhaft und bevorzugt aus Reinstluft oder Reinststickstoff, auf. Die Düse 26 ist im beispielhaft dargestellten Fall als Ringdüse ausgebildet, welche den Rohrkörper 10 vorzugsweise konzentrisch umgibt. Beispielhaft und bevorzugt kann die Düse 26 in an sich bekannter Weise als Laval-Düse ausgebildet sein. Der Mantelstrahl 28 umgibt das aus der Austrittsöffnung 22 des Expansionskanals 6 ausgegebenen CO₂-Gas/CO₂-Schnee Gemisch 8 und beschleunigt dieses zu einem CO₂-Schnee-Strahl 4.

Der CO₂-Schnee-Strahl 4 kann wie vorstehend erläutert und in an sich bekannter Weise zum Entfernen von filmischen und/oder partikulären Verunreinigungen 30 von einer Werkstückoberfläche 32 verwendet werden.

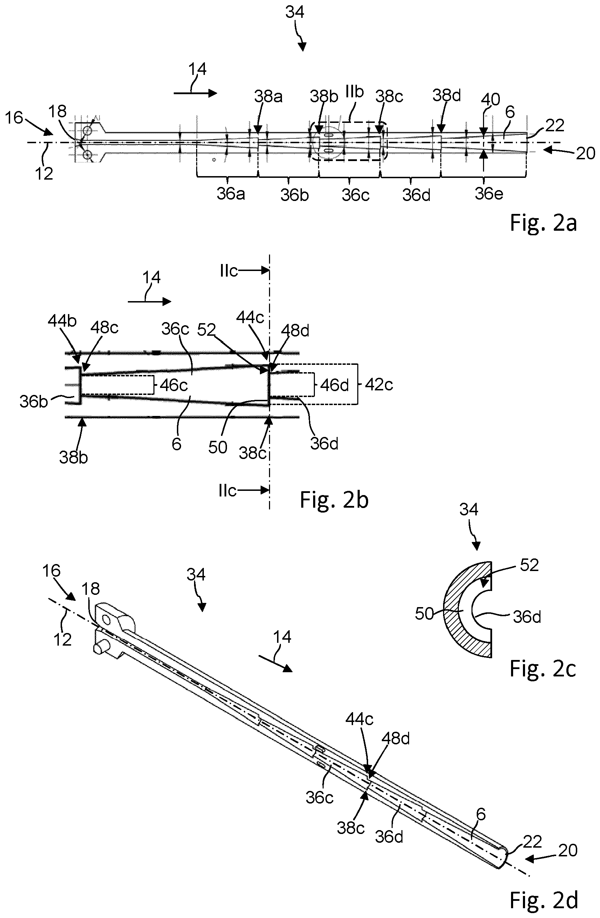

In den Figuren 2a bis 4c sind verschiedene Ausgestaltungen des Expansionskanals 6 im Detail dargestellt. Bei jeder der dargestellten Ausgestaltungen ist der den Expansionskanal 6 umgrenzende Rohrkörper 10 beispielhaft und bevorzugt aus, vorzugsweise zwei, vorzugsweise identischen, Rohrkörperhälften 34 gebildet. Die Figuren 2a bis 5b zeigen jeweils eine solche Rohrkörperhälfte 34 in verschiedenen Ansichten. Die Rohrkörperhälften 34 sind beispielhaft und bevorzugt aus Kunststoff, beispielsweise in einem Vakuum-Gussverfahren, hergestellt. Die Rohrkörperhälften 54 können beispielsweise mittels Ultraschallschweißen, Laserschweißen, Kleben, Crimpen oder durch Einpressen der Rohrkörperhälften 54 in ein Mantelrohr miteinander gefügt sein.

Bei jeder der dargestellten Ausgestaltungen weist der Expansionskanal 6 mehrere in Strömungsrichtung 14 hintereinander angeordnete Kanalabschnitte 36a, 36b, 36c, 36d, 36e, 36f, 36g auf. Der Expansionskanal 6 weist ferner zwischen den jeweiligen Kanalabschnitten 36a, 36b, 36c, 36d, 36e, 36f, 36g angeordnete Übergänge bzw. Übergangsbereiche 38a, 38b, 38c, 38d, 38e, 38f auf. In den Übergängen bzw. Übergangsbereichen 38a, 38b, 38c, 38d, 38e, 38f ändert sich der in einer Ebene orthogonal zu der Strömungsrichtung 14 liegende Querschnitt 40 des Expansionskanals 6 lokal. Die Querschnittsänderung in dem jeweiligen Übergang bzw. Übergangsbereich 38a, 38b, 38c, 38d, 38e, 38f führt jeweils zu einem Drucksprung, wodurch Verwirbelungen in der Strömung innerhalb des Expansionskanals 6 erzeugt werden, welche ein Durchmischen der im Expansionskanal 6 vorliegenden Phasen, insbesondere der CO₂-Flüssigphase und der CO₂-Gasphase, bewirken.

Zunächst wird ein jeweiliger Kanalanschnitt betrachtet:
Bei der Ausgestaltung gemäß den Figuren 2a bis 2d weiten sich die Kanalabschnitte 36a, 36b, 36c, 36d, 36e über ihre jeweilige Erstreckung in Strömungsrichtung 14 konisch auf. Vor diesen Kanalabschnitten 36a, 36b, 36c, 36d, 36e ist beispielhaft ein Zuführabschnitt mit konstantem Querschnitt vorgesehen. Beispielhaft und bevorzugt sind die Kanalabschnitte 36a, 36b, 36c, 36d, 36e als kegelstumpfförmige, also sich konisch aufweitende, Hohlräume innerhalb des Rohrkörpers 10 ausgebildet. Wie in Figur 2b beispielhaft für den Kanalabschnitt 36c dargestellt, ist der Querschnitt 42c des Expansionskanals 6 an dem stromabwärts gelegenen Ende 44c eines jeweiligen Kanalabschnitts 36c also größer als der Querschnitt 46c am stromaufwärts gelegenen Ende 48c dieses Kanalabschnitts 36c.

Wie in Figur 2b beispielhaft für die Kanalabschnitte 36c und 36d dargestellt, ist bei der vorliegenden Ausgestaltung der Querschnitt 46d des Expansionskanals 6 am stromaufwärts gelegenen Ende 48d eines jeweiligen Kanalabschnitts 36d größer als der Querschnitt 46c des Expansionskanals 6 am stromaufwärts gelegenen Ende 48c des in Strömungsrichtung 14 vor dem jeweiligen Kanalabschnitt 36d angeordneten Kanalabschnitts 36c. Der Querschnitt 46c,d des Expansionskanals 6 am stromaufwärts gelegenen Ende 48c,d eines jeweiligen Kanalabschnitts 36c, 36d wird also in Strömungsrichtung 14 gesehen von Kanalabschnitt 36c zu Kanalabschnitt 36d größer.

Nun werden die Übergänge zwischen den Kanalabschnitten betrachtet:
In einem jeweiligen Übergang 38a, 38b, 38c, 38d zwischen den Kanalabschnitten 36a, 36b, 36c, 36d, 36e gemäß Ausgestaltung Figuren 2a bis 2d verjüngt sich der Expansionskanal 6 sprunghaft nach radial innen. Wie in Figur 2b beispielhaft für die Kanalabschnitte 36c und 36d dargestellt, ist der Querschnitt 46d des Expansionskanals 6 am stromaufwärts gelegenen Ende 48d eines jeweiligen Kanalabschnitts 36d kleiner als der Querschnitt 42c des Expansionskanals 6 am stromabwärts gelegenen Ende 44c des in Strömungsrichtung 14 vor diesem Kanalabschnitt 36d angeordneten Kanalabschnitts 36c.

Beispielhaft und bevorzugt bildet der jeweilige Übergang 38a, 38b, 38c, 38d in dem vorliegenden Fall jeweils eine kreisringförmige Blende 50, wobei eine Blendenfläche 52 orthogonal zu der Strömungsrichtung 14 orientiert ist (vgl. Figuren 2b und 2c).

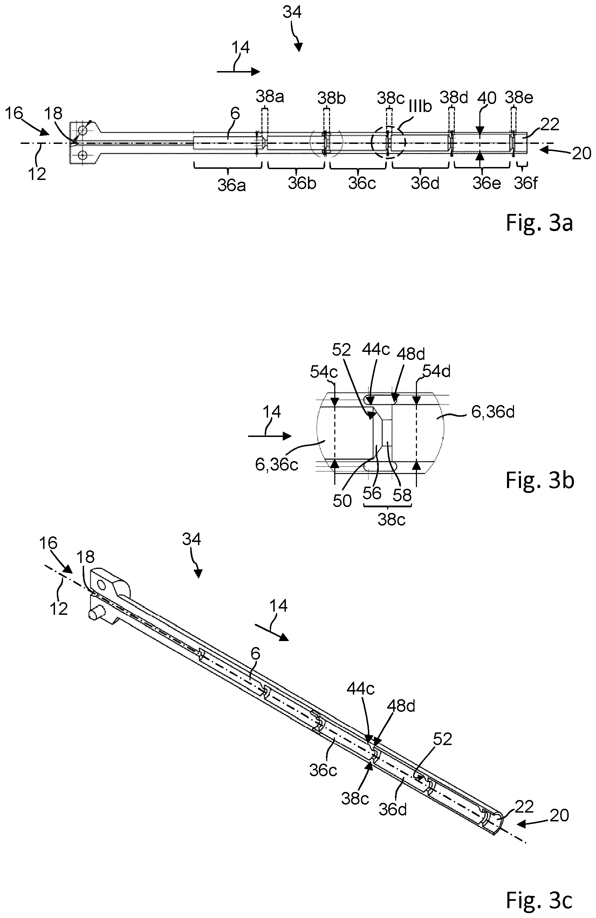

Die Figuren 3a bis 3c zeigen eine weitere andere Ausgestaltung des Expansionskanals 6, bei der die Kanalabschnitte 36a, 36b, 36c, 36d, 36e, 36f und ein beispielhaft vorgesehener Zuführabschnitt über ihre jeweilige Erstreckung in Strömungsrichtung 14 einen konstanten Querschnitt orthogonal zu der Strömungsrichtung 14 aufweisen. Wie in Figur 3b beispielhaft für die Kanalabschnitte 36c und 36d gezeigt, ist der Querschnitt 54d eines in Strömungsrichtung 14 nachfolgend angeordneten Kanalabschnitts 36d aber größer als der Querschnitt 54c des in Strömungsrichtung 14 vor diesem Kanalabschnitt 36d angeordneten Kanalabschnitts 36c. Die jeweiligen Kanalabschnitte 36a, 36b, 36c, 36d, 36e, 36f sind beispielhaft und bevorzugt als kreiszylindrische Hohlräume in dem Rohrkörper 10 ausgebildet.

Bei der Ausgestaltung gemäß den Figuren 3a bis 3c sind die jeweiligen Übergänge 38a, 38b, 38c, 38d, 38e zwischen den Kanalabschnitten 36a, 36b, 36c, 36d, 36e, 36f als Übergangsbereiche 38a, 38b, 38c, 38d, 38e ausgebildet, weisen also jeweils eine Erstreckung in Strömungsrichtung 14 auf. Beispielhaft und bevorzugt weist jeder Übergangsbereich 38a, 38b, 38c, 38d, 38e einen ersten sich konisch nach radial innen verjüngenden Abschnitt 56 und einen zweiten sich in Strömungsrichtung 14 an den konischen Abschnitt 56 anschließenden zylindrischen Abschnitt 58 auf (in Figur 3b beispielhaft für den Übergangsbereich 38c dargestellt). Die jeweiligen Übergangsbereiche 38a, 38b, 38c, 38d, 38e verbinden die Kanalabschnitte 36a, 36b, 36c, 36d, 36e, 36f strömungsmäßig miteinander.

Bei der Ausgestaltung gemäß den Figuren 3a bis 3c bildet der jeweilige Übergangsbereich 38a, 38b, 38c, 38d, 38e ebenfalls eine kreisringförmige Blende 50, wobei eine Blendenfläche 52 zu der Strömungsrichtung 14 geneigt orientiert ist (vgl. Figur 3b).

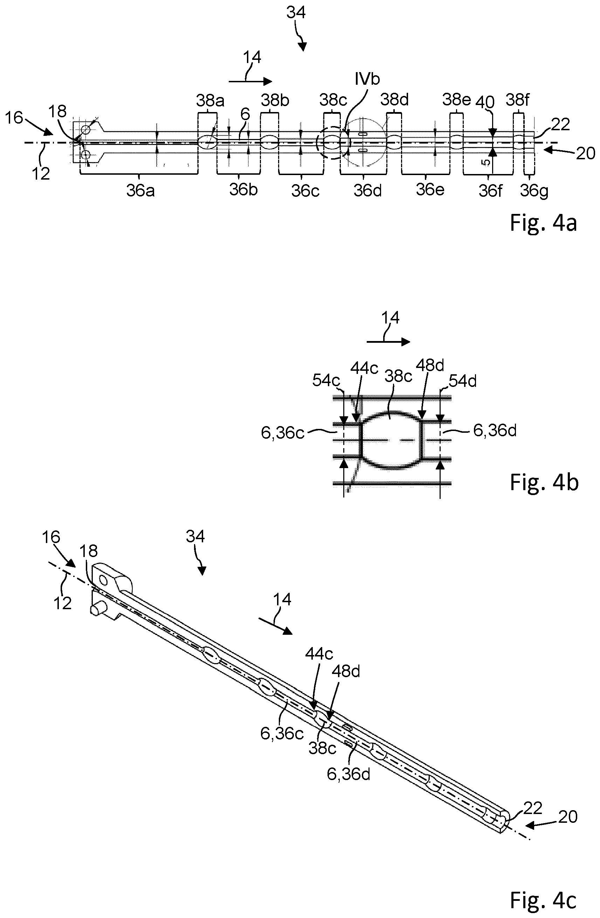

Die Figuren 4a bis 4c zeigen eine weitere andere Ausgestaltung des Expansionskanals 6, bei dem sich der Querschnitt des Expansionskanals in dem jeweiligen Übergangsbereich 38a, 38b, 38c, 38d, 38e, 38f zunächst in Strömungsrichtung 14 vergrößert. Beispielhaft und bevorzugt ist der jeweilige Übergangsbereich 38a, 38b, 38c, 38d, 38e, 38f als ovalähnliche Ausbuchtung ausgebildet (vgl. Figur 4b). In Strömungsrichtung 14 gesehen verringert sich in dem beispielhaft dargestellten Fall eine jeweilige Erstreckung der Übergangsbereiche 38a, 38b, 38c, 38d, 38e, 38f in Strömungsrichtung von Übergangsbereich zu Übergangsbereich (vgl. Figur 4a).

Die Kanalabschnitte 36a, 36b, 36c, 36d, 36e, 36f, 36g weisen bei der in den Figuren 4a bis 4c gezeigten Ausgestaltung über ihre jeweilige Erstreckung in Strömungsrichtung 14 jeweils einen konstanten Querschnitt auf, wobei der Querschnitt 54d eines in Strömungsrichtung 14 nachfolgend angeordneten Kanalabschnitts 36d aber größer ist als der Querschnitt 54c des in Strömungsrichtung 14 vor diesem Kanalabschnitt 36d angeordneten Kanalabschnitts 36c (in Figur 4b beispielhaft für die Kanalabschnitte 36c und 36c dargestellt). der Übergangsbereiche 38a, 38b, 38c, 38d, 38e, 38f in Strömungsrichtung von Übergangsbereich zu Übergangsbereich (vgl. Figur 4a).

Die Kanalabschnitte 36a, 36b, 36c, 36d, 36e, 36f, 36g weisen bei der in den Figuren 4a bis 4c gezeigten Ausgestaltung über ihre jeweilige Erstreckung in Strömungsrichtung 14 jeweils einen konstanten Querschnitt auf, wobei der Querschnitt 54d eines in Strömungsrichtung 14 nachfolgend angeordneten Kanalabschnitts 36d aber größer ist als der Querschnitt 54c des in Strömungsrichtung 14 vor diesem Kanalabschnitt 36d angeordneten Kanalabschnitts 36c (in Figur 4b beispielhaft für die Kanalabschnitte 36c und 36c dargestellt).

## Patentansprüche

1. Vorrichtung (2) zum Erzeugen eines CO₂-Schnee-Strahls (4), mit einem sich in einer Strömungsrichtung (14) erstreckenden Expansionskanal (6) zum Erzeugen eines CO₂-Gas/CO₂-Schnee Gemisches (8) ausgehend von flüssigem CO₂, wobei der Expansionskanal (6) eine Eintrittsöffnung (18) zum Zuführen von flüssigem CO₂ und eine Austrittsöffnung (22) zum Ausgeben des CO₂-Gas/CO₂-Schnee Gemisches (8) aufweist, und mit einer Düse (26) zum Erzeugen eines Mantelstrahls (28), welcher das aus der Austrittsöffnung (22) des Expansionskanals (6) ausgegebene CO₂-Gas/CO₂-Schnee Gemisch (8) umgibt und dieses beschleunigt, wobei der Expansionskanal (6) mehrere in Strömungsrichtung (14) hintereinander angeordnete Kanalabschnitte (36a, 36b, 36c, 36d, 36e, 36f, 36g) aufweist, wobei sich der in einer Ebene orthogonal zu der Strömungsrichtung (14) liegende Querschnitt (40) des Expansionskanals (6) in einem jeweiligen Übergang oder Übergangsbereich (38a, 38b, 38c, 38d, 38e, 38f) zwischen den Kanalabschnitten (36a, 36b, 36c, 36d, 36e, 36f, 36g) lokal ändert und dass der Querschnitt (46d) des Expansionskanals (6) an dem stromaufwärts gelegenen Ende (48d) eines jeweiligen Kanalabschnitts (36d) größer ist als der Querschnitt (46c) des Expansionskanals (6) an dem stromaufwärts gelegenen Ende (48c) des in Strömungsrichtung (14) vor dem jeweiligen Kanalabschnitt (36d) angeordneten Kanalabschnitts (36c), **dadurch gekennzeichnet, dass** sich der Querschnitt (40) des Expansionskanals (6) zumindest bei einigen Übergängen oder Übergangsbereichen (38a, 38b, 38c, 38d, 38e, 38f) in Strömungsrichtung (14) verringert.

2. Vorrichtung (2) nach Anspruch 1, **dadurch gekennzeichnet, dass** sich der Querschnitt (40) des Expansionskanals (6) bei jedem Übergang oder Übergangsbereich (38a, 38b, 38c, 38d, 38e, 38f), in Strömungsrichtung (14) verringert.

3. Vorrichtung (2) nach Anspruch 1 oder 2, **dadurch gekennzeichnet, dass** sich der Expansionskanal (6) in dem jeweiligen Übergang oder Übergangsbereich (38a, 38b, 38c, 38d, 38e, 38f) nach radial innen verjüngt.

4. Vorrichtung (2) nach einem der Ansprüche 1, 2 oder 3, **dadurch gekennzeichnet, dass** der Übergang oder Übergangsbereich (38a, 38b, 38c, 38d, 38e, 38f) eine kreisringförmige Blende (50) bildet, vorzugsweise wobei eine Blendenfläche (52) orthogonal zu der Strömungsrichtung (14) orientiert ist oder zu der Strömungsrichtung (14) geneigt orientiert ist.

5. Vorrichtung (2) zum Erzeugen eines CO₂-Schnee-Strahls (4), mit einem sich in einer Strömungsrichtung (14) erstreckenden Expansionskanal (6) zum Erzeugen eines CO₂-Gas/CO₂-Schnee Gemisches (8) ausgehend von flüssigem CO₂, wobei der Expansionskanal (6) eine Eintrittsöffnung (18) zum Zuführen von flüssigem CO₂ und eine Austrittsöffnung (22) zum Ausgeben des CO₂-Gas/CO₂-Schnee Gemisches (8) aufweist, und mit einer Düse (26) zum Erzeugen eines Mantelstrahls (28), welcher das aus der Austrittsöffnung (22) des Expansionskanals (6) ausgegebene CO₂-Gas/CO₂-Schnee Gemisch (8) umgibt und dieses beschleunigt, wobei der Expansionskanal (6) mehrere in Strömungsrichtung (14) hintereinander angeordnete Kanalabschnitte (36a, 36b, 36c, 36d, 36e, 36f, 36g) aufweist, wobei sich der in einer Ebene orthogonal zu der Strömungsrichtung (14) liegende Querschnitt (40) des Expansionskanals (6) in einem jeweiligen Übergang oder Übergangsbereich (38a, 38b, 38c, 38d, 38e, 38f) zwischen den Kanalabschnitten (36a, 36b, 36c, 36d, 36e, 36f, 36g) lokal ändert und dass der Querschnitt (46d) des Expansionskanals (6) an dem stromaufwärts gelegenen Ende (48d) eines jeweiligen Kanalabschnitts (36d) größer ist als der Querschnitt (46c) des Expansionskanals (6) an dem stromaufwärts gelegenen Ende (48c) des in Strömungsrichtung (14) vor dem jeweiligen Kanalabschnitt (36d) angeordneten Kanalabschnitts (36c),wobei sich der Querschnitt (40) des Expansionskanals (6) zumindest bei einigen Übergängen oder Übergangsbereichen (38a, 38b, 38c, 38d, 38e, 38f), vorzugsweise bei jedem Übergang oder Übergangsbereich (38a, 38b, 38c, 38d, 38e, 38f), in Strömungsrichtung (14) vergrößert,, **dadurch gekennzeichnet, dass** ein jeweiliger Übergangsbereich (38a, 38b, 38c, 38d, 38e, 38f) als Ausbuchtung, insbesondere oval oder blasen- oder kugelabschnittsförmig, ausgebildet ist.

6. Vorrichtung (2) nach einem der voranstehenden Ansprüche, **dadurch gekennzeichnet, dass** sich der jeweilige Übergang oder Übergangsbereich (38a, 38b, 38c, 38d, 38e, 38f) in Strömungsrichtung (14) über eine Länge von 0 mm bis 5 mm, vorzugsweise von 0 mm bis 4 mm, weiter vorzugsweise von 0 mm bis 3 mm, weiter vorzugsweise von 0 mm bis 2 mm, insbesondere von 1 mm bis 2 mm, erstreckt.

7. Vorrichtung (2) nach einem der voranstehenden Ansprüche, **dadurch gekennzeichnet, dass** zumindest einige Kanalabschnitte (36a, 36b, 36c, 36d, 36e, 36f, 36g), insbesondere alle Kanalabschnitte (36a, 36b, 36c, 36d, 36e, 36f, 36g), über ihre jeweilige Erstreckung in Strömungsrichtung (14) einen konstanten Querschnitt (40) aufweisen.

8. Vorrichtung (2) nach einem der voranstehenden Ansprüche, **dadurch gekennzeichnet, dass** sich zumindest einige Kanalabschnitte (36a, 36b, 36c, 36d, 36e, 36f, 36g), insbesondere alle Kanalabschnitte (36a, 36b, 36c, 36d, 36e, 36f, 36g), über ihre jeweilige Erstreckung in Strömungsrichtung (14), vorzugsweise stetig, insbesondere konisch, aufweiten.

9. Vorrichtung (2) nach einem der voranstehenden Ansprüche, **dadurch gekennzeichnet, dass** der Expansionskanal (6) in einer Ebene orthogonal zu der Strömungsrichtung (14) eine maximale Querschnittsfläche von weniger als 5,0 mm², vorzugsweise weniger als 3,0 mm², weiter vorzugsweise weniger als 1,0 mm², weiter vorzugsweise weniger als 0,5 mm² aufweist.

10. Vorrichtung (2) nach einem der voranstehenden Ansprüche, **dadurch gekennzeichnet, dass** der Expansionskanal (6) durch mindestens einen Hohlraum eines Werkstücks, insbesondere eines zylindrischen Rohrkörpers (10), gebildet ist.

## Claims

1. Device (2) for generating a CO₂ snow jet (4), comprising an expansion channel (6) which extends in a flow direction (14) for generating a CO₂ gas/CO₂ snow mixture (8) based on liquid CO₂, the expansion channel (6) having an inlet opening (18) for supplying liquid CO₂ and an outlet opening (22) for discharging the CO₂ gas/CO₂ snow mixture (8), and the device also comprising a nozzle (26) for generating a jacketed jet (28) which surrounds and accelerates the CO₂ gas/CO₂ snow mixture (8) discharged from the outlet opening (22) of the expansion channel (6), the expansion channel (6) having a plurality of channel portions (36a, 36b, 36c, 36d, 36e, 36f, 36g) arranged one behind the other in the flow direction (14), the cross section (40) of the expansion channel (6), which cross section lies in a plane orthogonal to the flow direction (14), varying locally in a relevant transition or transition region (38a, 38b, 38c, 38d, 38e, 38f) between the channel portions (36a, 36b, 36c, 36d, 36e, 36f, 36g), and that the cross section (46d) of the expansion channel (6) at the upstream end (48d) of a relevant channel portion (36d) is larger than the cross section (46c) of the expansion channel (6) at the upstream end (48c) of the channel portion (36c) arranged upstream of the relevant channel portion (36d) in the flow direction (14), **characterized in that** the cross section (40) of the expansion channel (6) reduces in the flow direction (14) at least at some of the transitions or transition regions (38a, 38b, 38c, 38d, 38e, 38f).

2. Device (2) according to claim 1, **characterized in that** the cross section (40) of the expansion channel (6) reduces in the flow direction (14) at every transition or transition region (38a, 38b, 38c, 38d, 38e, 38f).

3. Device (2) according to claim 1 or claim 2, **characterized in that** the expansion channel (6) tapers radially inward in the relevant transition or transition region (38a, 38b, 38c, 38d, 38e, 38f).

4. Device (2) according to any of claims 1, 2 or 3, **characterized in that** the transition or transition region (38a, 38b, 38c, 38d, 38e, 38f) forms an annular screen (50), preferably a screen surface (52) being oriented orthogonal to the flow direction (14) or being oriented inclined to the flow direction (14).

5. Device (2) for generating a CO₂ snow jet (4), comprising an expansion channel (6) which extends in a flow direction (14) for generating a CO₂ gas/CO₂ snow mixture (8) based on liquid CO₂, the expansion channel (6) having an inlet opening (18) for supplying liquid CO₂ and an outlet opening (22) for discharging the CO₂ gas/CO₂ snow mixture (8), and the device also comprising a nozzle (26) for generating a jacketed jet (28) which surrounds and accelerates the CO₂ gas/CO₂ snow mixture (8) discharged from the outlet opening (22) of the expansion channel (6), the expansion channel (6) having a plurality of channel portions (36a, 36b, 36c, 36d, 36e, 36f, 36g) arranged one behind the other in the flow direction (14), the cross section (40) of the expansion channel (6), which cross section lies in a plane orthogonal to the flow direction (14), varying locally in a relevant transition or transition region (38a, 38b, 38c, 38d, 38e, 38f) between the channel portions (36a, 36b, 36c, 36d, 36e, 36f, 36g), and that the cross section (46d) of the expansion channel (6) at the upstream end (48d) of a relevant channel portion (36d) is larger than the cross section (46c) of the expansion channel (6) at the upstream end (48c) of the channel portion (36c) arranged upstream of the relevant channel portion (36d) in the flow direction (14),the cross section (40) of the expansion channel (6) enlarging in the flow direction (14) at least at some of the transitions or transition regions (38a, 38b, 38c, 38d, 38e, 38f), preferably at every transition or transition region (38a, 38b, 38c, 38d, 38e, 38f), **characterized in that** a relevant transition region (38a, 38b, 38c, 38d, 38e, 38f) is formed as a protrusion, in particular an ovalshaped, bubble-shaped or spherical-portion-shaped protrusion.

6. Device (2) according to any of the preceding claims,
**characterized in that** the relevant transition or transition region (38a, 38b, 38c, 38d, 38e, 38f) extends in the flow direction (14) over a length of 0 mm to 5 mm, preferably 0 mm to 4 mm, more preferably 0 mm to 3 mm, more preferably 0 mm to 2 mm, in particular 1 mm to 2 mm.

7. Device (2) according to any of the preceding claims, **characterized in that** at least some of the channel portions (36a, 36b, 36c, 36d, 36e, 36f, 36g), in particular all of the channel portions (36a, 36b, 36c, 36d, 36e, 36f, 36g), have a constant cross section (40) over their particular extension in the flow direction (14).

8. Device (2) according to any of the preceding claims,
**characterized in that** at least some of the channel portions (36a, 36b, 36c, 36d, 36e, 36f, 36g), in particular all of the channel portions (36a, 36b, 36c, 36d, 36e, 36f, 36g), widen, preferably continuously, in particular conically, over their particular extension in the flow direction (14).

9. Device (2) according to any of the preceding claims, **characterized in that** the expansion channel (6) has a maximum cross-sectional surface of less than 5.0 mm², preferably less than 3.0 mm², more preferably less than 1.0 mm², more preferably less than 0.5 mm², in a plane orthogonal to the flow direction (14).

10. Device (2) according to any of the preceding claims,
**characterized in that** the expansion channel (6) is formed by at least one cavity of a workpiece, in particular a cylindrical tubular body (10).

## Revendications

1. Dispositif (2) permettant de générer un jet de neige de CO₂ (4), comportant un canal d'expansion (6) s'étendant dans une direction d'écoulement (14) pour la génération d'un mélange CO₂-gaz/CO₂-neige (8) à partir de CO₂ liquide, dans lequel le canal d'expansion (6) présente une ouverture d'entrée (18) pour l'alimentation en CO₂ liquide et une ouverture de sortie (22) pour l'émission du mélange CO₂-gaz/CO₂-neige (8), et comportant une buse (26) permettant de générer un jet formant enveloppe (28) qui entoure le mélange CO₂-gaz/CO₂-neige (8) émis par l'ouverture de sortie (22) du canal d'expansion (6) et accélère celui-ci, dans lequel le canal d'expansion (6) présente plusieurs sections de canal (36a, 36b, 36c, 36d, 36e, 36f, 36g) disposées les unes derrière les autres dans la direction d'écoulement (14), dans lequel la section transversale (40) du canal d'expansion (6), laquelle est située dans un plan orthogonal à la direction d'écoulement (14), varie localement dans une transition ou zone de transition (38a, 38b, 38c, 38d, 38e, 38f) respective entre les sections de canal (36a, 36b, 36c, 36d, 36e, 36f, 36g) **et en ce que** la section transversale (46d) du canal d'expansion (6) est plus grande au niveau de l'extrémité située en amont (48d) d'une section de canal (36d) respective que la section transversale (46c) du canal d'expansion (6) au niveau de l'extrémité située en amont (48c) de la section de canal (36c) disposée avant la section de canal (36d) respective dans la direction d'écoulement (14), **caractérisé en ce que** la section transversale (40) du canal d'expansion (6) est réduite au moins au niveau de certaines transitions ou zones de transition (38a, 38b, 38c, 38d, 38e, 38f) dans la direction d'écoulement (14).

2. Dispositif (2) selon la revendication 1, **caractérisé en ce que** la section transversale (40) du canal d'expansion (6) est réduite au niveau de chaque transition ou zone de transition (38a, 38b, 38c, 38d, 38e, 38f), dans la direction d'écoulement (14).

3. Dispositif (2) selon la revendication 1 ou 2, **caractérisé en ce que** le canal d'expansion (6) se rétrécit radialement vers l'intérieur dans la transition ou zone de transition (38a, 38b, 38c, 38d, 38e, 38f) respective.

4. Dispositif (2) selon l'une des revendications 1, 2 ou 3,
**caractérisé en ce que** la transition ou zone de transition (38a, 38b, 38c, 38d, 38e, 38f) forme un diaphragme (50) en forme d'anneau circulaire, de préférence dans lequel une surface de diaphragme (52) est orientée orthogonalement à la direction d'écoulement (14) ou est orientée de manière inclinée par rapport à la direction d'écoulement (14).

5. Dispositif (2) permettant de générer un jet de neige de CO₂ (4), comportant un canal d'expansion (6) s'étendant dans une direction d'écoulement (14) pour la génération d'un mélange CO₂-gaz/CO₂-neige (8) à partir de CO₂ liquide, dans lequel le canal d'expansion (6) présente une ouverture d'entrée (18) pour l'alimentation en CO₂ liquide et une ouverture de sortie (22) pour l'émission du mélange CO₂-gaz/CO₂-neige (8), et comportant une buse (26) permettant de générer un jet formant enveloppe (28) qui entoure le mélange CO₂-gaz/CO₂-neige (8) émis par l'ouverture de sortie (22) du canal d'expansion (6) et accélère celui-ci, dans lequel le canal d'expansion (6) présente plusieurs sections de canal (36a, 36b, 36c, 36d, 36e, 36f, 36g) disposées les unes derrière les autres dans la direction d'écoulement (14), dans lequel la section transversale (40) du canal d'expansion (6), laquelle est située dans un plan orthogonal à la direction d'écoulement (14), varie localement dans une transition ou zone de transition (38a, 38b, 38c, 38d, 38e, 38f) respective entre les sections de canal (36a, 36b, 36c, 36d, 36e, 36f, 36g) **et en ce que** la section transversale (46d) du canal d'expansion (6) est plus grande au niveau de l'extrémité située en amont (48d) d'une section de canal (36d) respective que la section transversale (46c) du canal d'expansion (6) au niveau de l'extrémité située en amont (48c) de la section de canal (36c) disposée avant la section de canal (36d) respective dans la direction d'écoulement (14), dans lequel la section transversale (40) du canal d'expansion (6) s'élargit au moins au niveau de certaines transitions ou zones de transition (38a, 38b, 38c, 38d, 38e, 38f), de préférence au niveau de chaque transition ou zone de transition (38a, 38b, 38c, 38d, 38e, 38f), dans la direction d'écoulement (14), **caractérisé en ce qu'une** zone de transition (38a, 38b, 38c, 38d, 38e, 38f) respective est réalisée sous forme de courbure, en particulier ovale ou en forme de bulle ou de section sphérique.

6. Dispositif (2) selon l'une des revendications précédentes,
**caractérisé en ce que** la transition ou zone de transition (38a, 38b, 38c, 38d, 38e, 38f) respective s'étend dans la direction d'écoulement (14) sur une longueur allant de 0 mm à 5 mm, de préférence de 0 mm à 4 mm, de manière particulièrement préférée de 0 mm à 3 mm, de manière particulièrement préférée de 0 mm à 2 mm, en particulier de 1 mm à 2 mm.

7. Dispositif (2) selon l'une des revendications précédentes,
**caractérisé en ce qu'au** moins certaines sections de canal (36a, 36b, 36c, 36d, 36e, 36f, 36g), en particulier toutes les sections de canal (36a, 36b, 36c, 36d, 36e, 36f, 36g), présentent une section transversale (40) constante sur leur extension respective dans la direction d'écoulement (14).

8. Dispositif (2) selon l'une des revendications précédentes,
**caractérisé en ce qu'**au moins certaines sections de canal (36a, 36b, 36c, 36d, 36e, 36f, 36g), en particulier toutes les sections de canal (36a, 36b, 36c, 36d, 36e, 36f, 36g), se dilatent, de préférence de continuellement, en particulier de manière conique, sur leur extension respective dans la direction d'écoulement (14).

9. Dispositif (2) selon l'une des revendications précédentes,
**caractérisé en ce que** le canal d'expansion (6) présente, dans un plan orthogonal à la direction d'écoulement (14), une surface maximale de section transversale inférieure à 5,0 mm², de préférence inférieure à 3,0 mm², de manière particulièrement préférée inférieure à 1,0 mm², de manière particulièrement préférée inférieure à 0,5 mm².

10. Dispositif (2) selon l'une des revendications précédentes,
**caractérisé en ce que** le canal d'expansion (6) est formé par au moins une cavité d'une pièce, en particulier d'un corps tubulaire cylindrique (10).
